Europäisches Patentamt

European Patent Office

Office européen des brevets

(19)

(11) **EP 0 710 007 A2**

(12) **EUROPEAN PATENT APPLICATION**

(43) Date of publication:
   **01.05.1996 Bulletin 1996/18**

(51) Int Cl.⁶: **H04N 1/405**

(21) Application number: **95307564.5**

(22) Date of filing: **24.10.1995**

(84) Designated Contracting States:
   **DE ES FR GB IT**

(30) Priority: **27.10.1994 US 328741**

(71) Applicant: **XEROX CORPORATION**
   **Rochester New York 14644 (US)**

(72) Inventor: **Harrington, Steven J.**
   **Holley NY 14470 (US)**

(74) Representative: **Goode, Ian Roy et al**
   **Rank Xerox Ltd**
   **Patent Department**
   **Parkway**
   **Marlow Buckinghamshire SL7 1YL (GB)**

(54) **Image halftoning system**

(57)    A contone reproduction method and apparatus for converting an input set I(x,y,c) of contone signals to an output set B(x,y,d) of binary signals suitable for driving a selected output device, utilizing a screen cell defined by repetitions of a subcell based on a subcell matrix (100) of threshold factors to which an offset is applied (102) in accordance with the position of the repetition of the subcell in the screen cell to obtain threshold signals, and wherein the particular subcell matrix of thresholds is selected in accordance with the determined image characteristic.

FIG. 5

## Description

The present invention relates to a digital halftoning system, and in particular to a method and apparatus for increasing the image quality using a halftone screen cell.

Image information, be it color or black and white, is commonly generated in a raster format where the raster comprises a plurality of gray level (contone) signals or pixels, defined by digital values, each value representing a gray level among a number of gray levels. Thus, in an 8 bit system, 256 levels of gray are present, where each level represents an increment of gray between black and white. In the case of color rasters, where three defining colors or separations each include 256 levels of information, there may be more than 16 million colors defined by the combination of contone separation bitmaps. Some image output terminals (IOTs) typically print in a limited number of levels, either a spot or a no spot in the binary case, or a limited number of levels associated with the spot, for example, four in the quaternary case. Accordingly, it is necessary to reduce the contone signals to a more limited number of levels so that they can be printed.

Digital halftoning methods provide a method of rendering images having a continuum of grays on binary image output terminals (IOTs) such as electronic printers. In such arrangements, patterns of black and white spots, which are integrated by the human eye into gray when viewed from a distance, are used to represent different levels of gray.

One standard method for converting contone signals to binary signals is through the use of a halftone screening process. In such arrangements, contone signals in a selected area of the image are thresholded in accordance with preselected patterns (a screen cell or array) of threshold levels to generate binary or black and white signals which together represent different levels of gray. The screen cell defines various levels of gray by distributing threshold levels through an area corresponding to the cell. In general, screening can be described using the boolean valued function:

$$H_1(x, y, d) = d(x, y) > T(x \bmod M, y \bmod N),$$

which determines if a pixel or an area of pixels at position (x, y) in a contone image should be black or white. The function $H_1(x, y, d)$ compares the darkness or depth $d(x, y)$ of the contone signals corresponding to position (x, y) with a threshold level T of a predetermined screen cell (M x N) replicated to cover the image. Since this function must be applied to every signal in the contone image, it must be simple and quick to calculate using hardware or software. A fuller discussion of this process may obtained in "Digital Halftoning" by R. Ulichney, The MIT Press, Cambridge, MA (1987) and common implementation is described in in US-A-4,149,194 to Holladay.

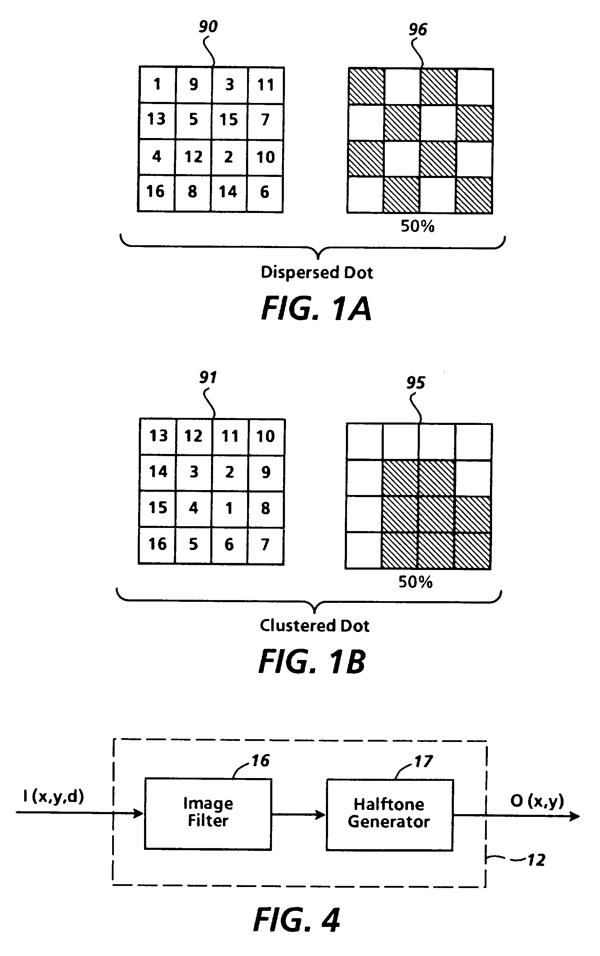

A number of different threshold patterns or dither signals have been used to describe a screen cell, as shown in Figures 1A and 1B. These patterns indicate the order in which pixels (spots) are switched from white to black within the cell area to form dots providing varying gray density. Threshold patterns are commonly classified by the "dot" that they produce, with two common threshold patterns A and B producing either dispersed dot patterns or clustered dot patterns, examples of which are shown, respectively. Note that here, "spot" refers to the smallest unit printable by the IOT, typically a pixel, while the term "dot" refers to the collection of spots printed corresponding to a screen cell. The different types of dots can be used by different IOT's to optimize their reproduction of gray. Xerographic IOT's tend to require the use of clustered dots, as single spots do not reproduce well with xerographic processes, while ink jet IOT's use dispersed dots as a method of preventing bleeding and puddling problems.

A fundamental drawback of these contone representation methods is a trade-off that exists between the number of gray levels in a screen cell (fidelity) and resolution of the reproducing device which are traditionally binary, such as printers. Reducing the size of the screen cell to include fewer pixels increases the effective resolution or frequency of a binary image while reducing the number of gray levels. Thus, an image reproduced with a high effective resolution will result in sharp detail, while an image reproduced with many intensity levels will result in very uniform grays or colors with high fidelity.

Another problem associated with screening is that the shades of gray generated using a screen cell on digital printing devices such as xerographic printers and thermal ink jet printers do not yield a visually linear progression of shades of gray. In fact the change from no spots in a screen cell to one spot in the screen is a much more pronounced change in the visual perception of the shade than the change from one less than the maximum number of spots to the maximum number of spots. That is, each spot has a far greater visual effect at the light end of the tone scale than at the dark end. Consequently, fewer visually equal tones are possible than the number of dots in a screen cell would at first suggest. In both xerography and ink jet printing, attempts have been made to improve the image quality of the reproduced image.

Conventional screening with a single halftone threshold array gives a monotonic growth in the dot pattern with increasing density, that is, after reaching the density value where a spot in the pattern is colored black, the spot is black for all darker densities. As the density increases one can add spots to the pattern, but one cannot remove them. This causes another problem with conventional screening. The patterns generated for some density levels can give visible textures or be otherwise esthetically unpleasing. Also the sequence of density values generated by the patterns may not be as uniform as desired.

Xerographic printers, for example, do not always render faithful copies of continuous tone originals, since typically such printers have a tone reproduction curve (TRC) with a steep slope due to either the discharge characteristic of the photoreceptor or the solid area development characteristic of the xerographic development system, or both. As a result, reproduced images may have washed-out highlights or overdeveloped shadows. At distances closer than the normal viewing distance, or when the size of the halftone cells are large, the quality of the reproduced picture is decreased. Just acceptable graininess requires at least 2.56 halftone cells per mm (65 cells per inch). A good quality halftone requires about 3.94 cells per mm (100 cells per inch). High quality (e.g., magazine type) requires about 5.91 cells per mm (150 cells per inch). A hybrid system consisting of a halftone with three or four gray levels is described in a publication entitled "Hybrid (Gray Pixel) Halftone Printing", by Lama et al. in the Journal of Imaging Technology, Vol. 15, No. 3, June, 1989.

Thermal ink jet printers on the other hand, have used various approaches to control the overall screen cell pattern by altering the size and spacing of individual ink drops to enhance the uniformity and consistency of halftone patterns.

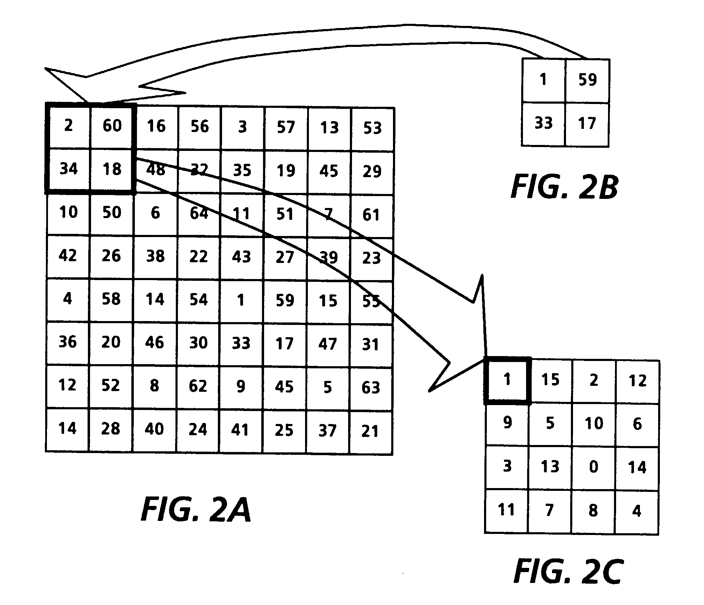

In a typical system, a screen function can be stored in a standard storage device such as a RAM memory, and repeated across a page as required, as taught for example in US-A 4,149,194 to Holladay, or it can be derived as a function. With reference now to Figure 2A, it can be seen that the Bayer dot screen cell or pattern as taught in "An Optimum Method for Two Level Rendition of Continuous Tone Pictures" by B. E. Bayer, in the Proceedings of IEEE Int. Conf. Commun., Conference Record pp (26-11) to (26-15), 1973, can be composed of a 4 x 4 collection of the 2 x 2 subcells or subpatterns given in Figure 2B. In such a case, it can be seen that the thresholds are adjusted by the offsets of Figure 2C. Another way of expressing this, is that instead of comparing the intensity at position (x,y) to the threshold level given in Pattern [x%8][y%8] (typically stored in RAM memory), we can compare the intensity at position (x,y) to the threshold level given in Subpattern [x%2][y%2] + Offset [(x/2)%4] [(y/2)%4] (in this notation, the "%" symbol notation indicates the remainder operation in the C programming language). Note that all conventional screen patterns can be placed in the model, even if this relationship is non-existent, by defining the subpatterns as the full halftone cell and the offset array as a single "0" entry. However, the invention that will be described is preferably used when the halftone cell can be factored into many small subpatterns.

US-A 5,130,821 to Ng describes a halftoning system in which a predefined threshold pattern for a screen cell is varied, based on input image density gradient.

It is an object of the invention to provide a method and apparatus for optimizing reproduction of contones in imaging.

In accordance with the invention, there is provided a contone reproduction method for converting an input set of contone signals to an output set of binary signals suitable for driving a selected output device, utilizing a screen matrix defined by repetitions of a subcell matrix of threshold factors, to which offset values are applied in accordance with the position of the repetition of the subcell in the screen cell to obtain threshold signals, the steps including: a) receiving a portion of an image defined in terms of contone signals, corresponding to a subcell, for conversion to binary signals suitable for driving a binary output device; b) determining an image characteristic; c) selecting a subcell matrix from a set of subcell matrices in accordance with the determined image characteristic; d) obtaining an offset value, as a function of position of the repetition of the subcell in the screen cell and applying said offset to each threshold factor in the subcell matrix to generate a threshold signal; e) thresholding each contone signal in the image portion with a corresponding threshold signal to obtain a binary output. The set of subcell matrices from which the selection is made includes a plurality of matrices having the same threshold factors in different spatial arrangements.

In summary, the invention includes a neighborhood-based screening process which uses image characteristic information to determine local halftone application.

The present invention allows the use of several subpatterns that together can generate a halftone cell pattern that is distinct from a halftone cell pattern generated by using only a single subpattern. When applied to the halftone, the intensity of the image at position x,y will be compared to Subpattern[i] [x%a][y%b] + Offset [(x/c)%4] [(y/d)%4] where i represents the $i^{th}$ subpattern, and a and b are the subpatterns dimensions, where c and d are the halftone cell dimensions. This provides a much greater flexibility in halftone design. The behavior of the halftone can be altered by the selection of the subpattern, which can be varied at a relatively high frequency. The subpattern can be chosen based on a variety of parameters, including for example, neighboring spots or subdots (plural spot groupings that together make up a complete dot). Thus, the halftone structure can be adjusted according to the local behavior of the image. The information used in selecting the subpattern may be, for example, spot values for neighboring pixels, the total number of spots darkened in a neighboring subpattern or the particular subpattern chosen for the neighboring cells.

These and other aspects of the invention will become apparent from the following descriptions to illustrate a preferred embodiment of the invention read in conjunction with the accompanying drawings wherein the same reference numerals have been applied to like parts and in which:

Figures 1A and 1B illustrate the principle of screen patterns used in halftoning contone signals;
Figures 2A, 2B and 2C illustrate a Bayer dot, its subpattern arrays of threshold factors, and its array of subpattern offsets;

Figure 3 represents a block diagram of a system which might employ the present invention;

Figure 4 illustrates an example image processing unit for use with the Figure 3 system;

Figure 5 illustrates details of the Figure 4 halftone processor, accomplishing the present invention;

Figures 6A, 6B and 6C show comparable halftone dots, where 6B is generated by prior art processes, and 6C is generated by the present invention;

Figures 7A, 7B, and 7C illustrate distinctive growth patterns in cells with different threshold orders; and

Figure 8 illustrates details of the subpattern variation logic used in Figure 5.

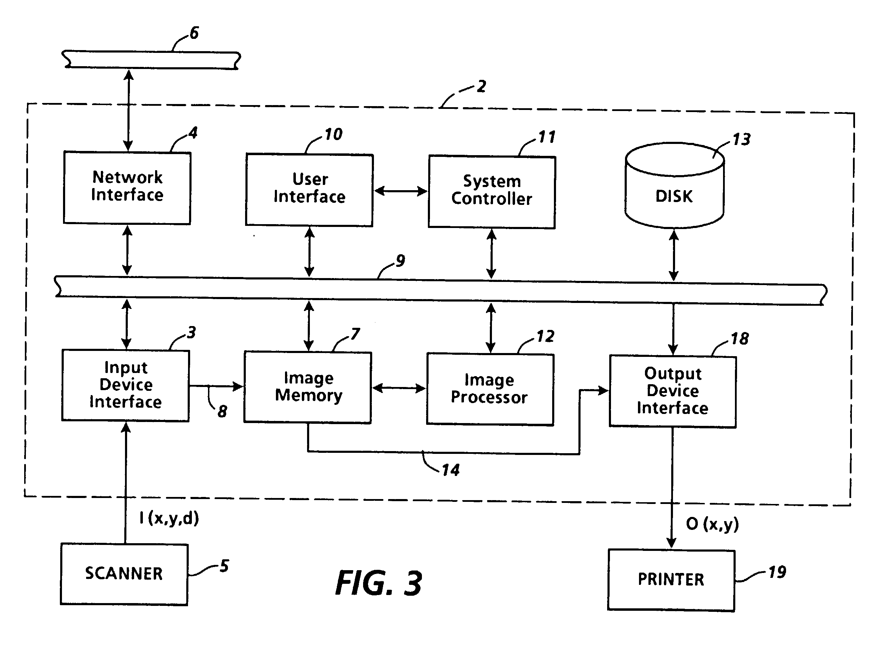

Referring now to the drawings where the showings are for the purpose of describing an embodiment of the invention and not for limiting same, a basic document processing system is shown in Figure 3 including a document processing system 2. The image processing system 2 receives image information either through input device interface 3 or network interface 4. In this embodiment, input device interface 3 is connected to scanner 5 which generates images I(x,y,d) having a defined width x, length y and number of density levels d. Common scanners, such, for example, the Pixelcraft 7650, produce 8 bit/pixel data, providing d = 256, at resolutions acceptable for many purposes. Color images may be defined by a plurality of bitmaps. Alternatively, image information received through network interface 4 from network 6 can be transmitted from devices such as remote scanners, file servers or page description language (PDL) drivers (not shown). Information received through network interface 4 may contain in part or in full image information in the form of raster images having a defined width, length and depth.

Once a raster image is received from scanner 5 by document processing system 2, image I(x,y,d) is transmitted to image memory 7 either through connection 8 or data bus 9 as directed by system controller 11. In the event image information is simultaneously received through interfaces 3 and 4, controller 11 routes image information from network 6 to secondary storage or hard disk 13 through data bus 9, and image information from input device or scanner 5 to primary storage or image memory 7 using connection 8. Once image information such as image I(x,y,d) is received and stored in memory 7, image processor 12 is invoked by controller 11 as programmed through user interface 10 which operates on a video display or the like. Subsequent to processing image I(x,y,d) resulting binary image information O(x,,y) (e.g. black or white pixel values) stored in memory 7 is either reproduced on output device or printer 19 through connection 14 and output device interface 18 or transmitted to secondary storage 13 or a remote device connected to network 6 through data bus 9.

As used herein, the term "dot" refers to a product or an image resulting from a screening process. A "screen cell", as used herein, refers to the set of pixels which together will form the dot, while the term "screen matrix" will be used to describe the set of values which together make up the set of threshold to be applied. A "pixel" refers to an image signal associated with a particular position in an image, having a density between white and black. Accordingly, pixels are defined by intensity and position. A dot is made up of a plurality of pixels. While printers print pixels (sometimes referred to as "spots") screening methods sometimes cluster the pixels together into a dot. Dots of clustered pixels have better reproduction characteristics on some printing hardware than dots of unclustered pixels.

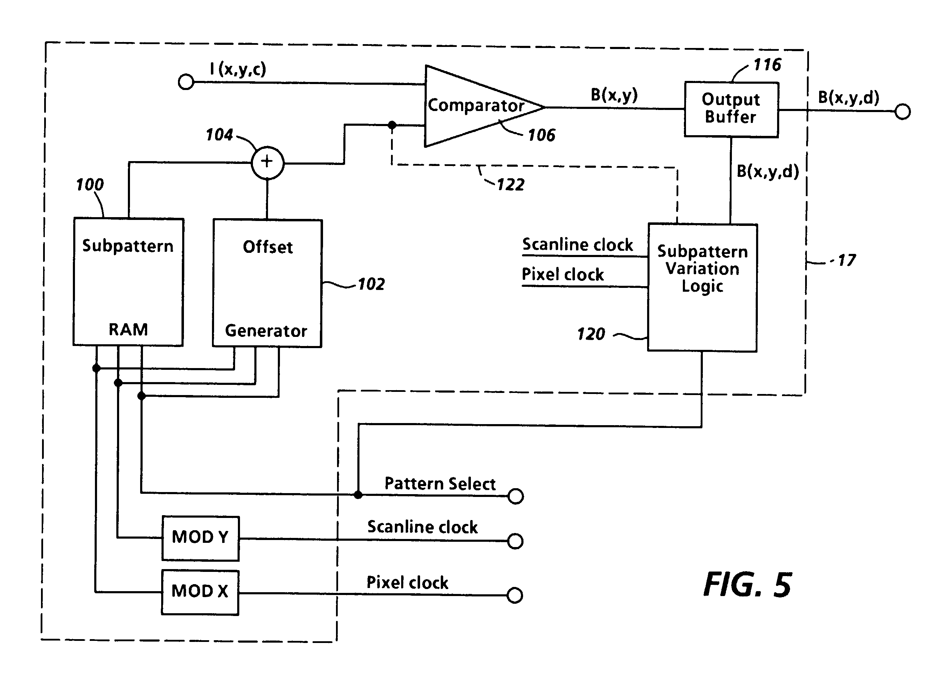

With reference now to Figure 4, contone raster information forming image I(x, y, d) once stored in memory 7 is converted to a binary image using halftone generator 17 before reproduction on binary output device or printer 19. Image processor 12 may process input image I(x,y,d) with filter 16 before halftoning is performed in accordance with the invention using halftone generator 17. Image filter 16 can include image processing functions such as image enhancement or resolution conversion. Processing is performed by image filter 16 to enhance, clean, convert to an appropriate format or scale to a suitable size input image I(x,y,d) for processing by halftone generator 17. In general, filter 16 pre-processes an image for halftone generator 17 so that the resulting halftone image is optimized in accordance with physical properties of a particular output device reproducing the halftone image output by halftone generator 17.

Figure 5 shows an embodiment of halftone generator 17 that receives input image I(x,y,c) and produces as output binary image B(x,y), both of which are stored in memory 7 of system 2 (of Figure 3). Initially, system controller 11 (from Figure 3) selects from one or more screen matrices and screen angles that can be used for processing input image I(x, y, d). In the present invention, upon selection of such a cell, the subcell pattern, comprising a sub array of threshold factors is stored to RAM 100, with the set of subcell patterns forming variations thereof. At about the same time, an offset function comprising an array of offsets to be applied to the threshold factors, is loaded into RAM 102. The RAMs are responsive to a pixel clock signal and a scan line clock signal indicating the location of the contone signal I(x,y,c) in the image I, and accordingly provide an address to obtain the correct subpattern threshold factor based on that position. For each I(x,y,c) in image I, a threshold factor is obtained from RAM 100, an offset is obtained from 102, the values are combined at adder 104, and compared to I(x,y,c) at comparator 106 to generate binary signals B(x,y) to be stored in output buffer 116. It will no doubt be understood that the offsets could also be provided via logic circuits, instead of memory circuits, since the values for the offsets are related simply to position in the image.

In accordance with the invention, binary signals B(x,y) stored at buffer 116 are also directed along a feedback path to subpattern variation logic 120. Based on the binary signals resulting from the previously applied subpatterns, a signal is generated to the subpattern select input to RAM 100, to call a different subpattern for the next portion of the screen cell. Optionally, as illustrated by the dotted line connection 122, the subpattern variation logic may also take into account input signal I (x,y,d) in processing the subpattern variation. The subpattern variation logic may include memory to store past subpatterns selections or image values for use in the selection process.

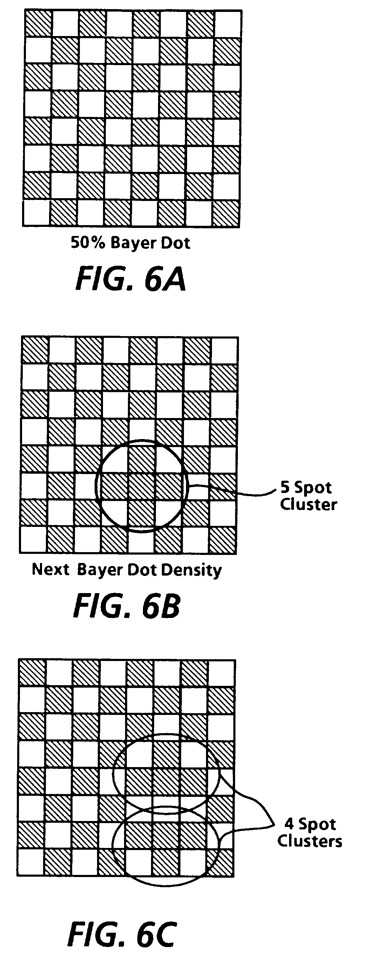

With the basic operation of the system described, an example will be provided. At Figure 6A, a Bayer-type screen cell is shown, illustrating 50% intensity. In an 8-bit computing system, this area would correspond to a gray level of 128 (where white is 255 and black is 0). Because of the monotonic behavior of conventional halftones, if gray level 124 is to be obtained an additional black pixel must be set, as shown in Figure 6B. Unfortunately, the resulting pattern includes a noticeable artifact because of the 5 abutting pixels that are turned on. The artifact would be greatly mitigated if, instead, the pattern of Figure 6C could be obtained, which only has 4 dots abutting pixels turned on.

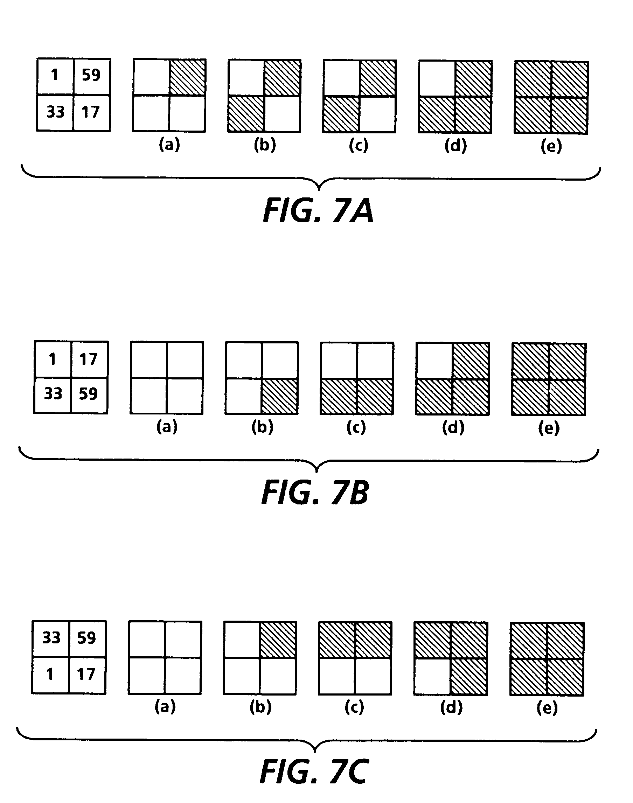

The Bayer screen matrix has the subpattern and offset description of Figures 2B and 2C so that the basic Bayer subpattern increases from 255 to 0 in intensity as shown in Figure 7A. However, to obtain the screen cell pattern of Figure 6C, the patterns of Figure 7B and 7C must be used, so that the 50% pattern is given as (c) in Figure 7B and c in Figure 7C. Accordingly, to construct the pattern of Figure 6C, three different patterns must be used.

To determine which subpattern to use, the number of black spots in the subpattern directly above the subcell of interest is counted (with the knowledge that it is the pattern of 7A). Since we only want to employ the new matrix in the case where there is one subcell with one or three dark spots in a region where other subcells have two dark spots, we also look to the left and right neighbors of the subcell above. Accordingly, if the spots count for the subcell above follow the sequence

2 3 2

the second subpattern of thresholds is used. If the count of spots in the subcells above are

2 1 2

Then the third subpattern is used.

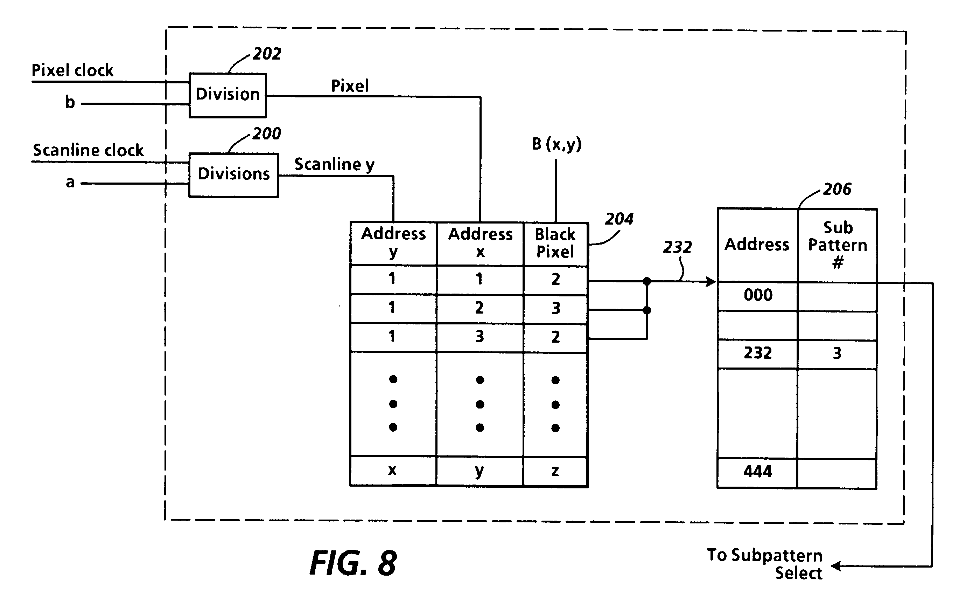

Figure 8 illustrates the subpattern variation logic 120 for this particular embodiment. Based on the pixel clock signal and the scan line clock signals at Mod circuits 200 and 202, respectively, to determine the particular position of any pixel in a particular subpattern repetition, position, a register 204 stored in ROM or RAM memory storing subpattern count or sum indexed by x and y positions is incremented by a value of 1 for each black pixel in the signal B(x,y) at output buffer 116 (Figure 6). The Div circuits 200 and 202 provide position information for each pixel in B(x,y) on the basis of the size of each subpattern in terms of a and b, which are provided as inputs to the circuits respectively. In this particular embodiment the black pixel count is stored for a plurality of scan lines that accommodates at least one line of subpatterns, or in the case of the 2 x 2 subpattern elements forming the Bayer dot described, 2 scan lines.

As these values are filled in, the black pixel count for each subpattern becomes the output of register 204, for use as index values to a lookup table 206, stored in ROM or RAM memory, that indexes black pixel count #'s to call or select subpattern cell #'s. The subpattern cell select number is fed back to subpattern RAM 100 (Figure 3), to select from the patterns stored there for that subpattern variation. In this particular arrangement, the mth subpattern in the nth row of subpatterns (subpattern (m,n)) uses the black pixel count #'s for subpatterns (m-1,n-1)(m-1,n) (m-1,n + 1).

It will no doubt be appreciated that the number of black pixels and the density of the subpattern are almost interchangeable values in binary systems, although not necessarily so when using systems printing more than 2 levels of optical density. Accordingly, instead of counting black pixels, the system could measure accumulated density, and base pattern selection on density.

It might also be appreciated that a matching arrangement in which the actual pattern that is printed is determined. Accordingly, instead of counting black pixels, the system might match the printed pattern with a pattern selection based on the previously printed patterns.

It will also be readily apparent that the input image density may aid in the selection of a pattern. Subpatterns can be selected to give the closest approximation to the desired image density, or when there are abrupt changes in density patterns that best reproduce fine edge structure can be used.

The disclosed method of halftoning may be readily implemented in software using object oriented software development environments that provide portable source code that can be used on a variety of hardware platforms. Alternatively, the disclosed image processing system may be implemented partially or fully in hardware using standard logic circuits or specifically on a single chip using VLSI design. Whether software or hardware is used to implement the system varies depending on the speed and efficiency requirements of the system and also the particular function and the particular software or hardware systems and the particular microprocessor or microcomputer systems being utilized. The image processing system, however, can be readily developed by those skilled in the applicable arts without undue experimentation from the functional description provided herein together with a general knowledge of the computer arts.

## Claims

1. A contone reproduction method for converting an input set of contone signals to an output set of binary signals suitable for driving a selected output device, utilizing a screen matrix defined by repetitions of similarly sized subcell matrices of threshold factors, to which repetitions and offset values are applied in accordance with the position of the repetition of the subcell in the screen cell to obtain threshold signals, the steps including:

    a) receiving a portion of an image defined in terms of contone signals, for conversion to binary signals suitable for driving an output device;
    b) determining an image characteristic;
    c) selecting a subcell matrix from a set of possible subcell matrices in accordance with the determined image characteristic;
    d) obtaining an offset stored in memory, as a function of position of the repetition of subcells in the screen matrix and applying said offset to each threshold factor in the selected subcell matrix to generate threshold signals;
    e) thresholding each contone signal in the image portion with a corresponding threshold signal to obtain a binary output.

2. The method as defined in claim 1, where a set of subcell matrices of threshold factors includes a plurality of subcell matrices, each with a distinct spatial arrangement of the same threshold factors.

3. The method as defined in claim 1, wherein the image characteristic is a measurement of density of a subcell adjacent to a subcell of interest.

4. A contone reproduction method for converting an input set of contone signals to an output set of binary signals suitable for driving a selected output device, utilizing a screen matrix defined by repetitions of similarly sized subcell matrices of threshold factors, to which repetitions and offset values are applied in accordance with the position of the repetition of the subcell in the screen cell to obtain threshold signals, the steps including:

    a) receiving a set of contone signals describing a portion of an image, for conversion to binary signals suitable for driving an output device;
    b) measuring density in the image for an area corresponding to a subcell of interest;
    c) for at least one previously processed subcell adjacent to the subcell of interest, determining the spatial arrangement of binary signals representing corresponding contone signals therein;

    d) selecting a subcell matrix from a set of possible subcell matrices in accordance with the determined spatial arrangement of binary signals representing corresponding contone signals in the at least one previously processed subcell, said set of subcell matrices each having a distinct spatial arrangement of the same threshold factors;
    e) obtaining an offset stored in memory, as a function of position of the repetition of subcells in the screen cell and applying said offset to each threshold factor in the selected subcell matrix to generate threshold signals;
    f) thresholding each contone signal in the image portion with a corresponding threshold signal to obtain a binary output.

5. A contone reproduction device for converting an input set of contone signals to an output set of binary signals suitable for driving a selected output device, utilizing a screen matrix defined by repetitions of stored similarly-sized subcell matrices of thresholds factors, to which repetitions of a stored set of offset values are applied in accordance with the position of the repetition of the subcell in the screen cell, to obtain thresholding signals, comprising:

    a) an image buffer storing at least a portion of an image defined in terms of contone signals, for conversion to binary signals suitable for driving an output device;
    b) a first memory storing a plurality of sets of subcell matrices, and addressable to output a subcell matrix in accordance with the determined image characteristic, said plurality of subcell matrices each having a distinct spatial arrangement of the same threshold factors;
    c) a circuit providing offset values, each offset value to be applied to each threshold in a subcell matrix, as a function of position of the repetition of the subcell in the screen cell to generate a threshold signal in the screen matrix;
    d) a comparator circuit comparing each contone signal in the image portion with a corresponding threshold signal in the screen matrix to obtain a binary output;
    e) image characteristic logic, determining an image characteristic and selecting one of a subcell matrices having a distinct spatial arrangement of the threshold factors in accordance with the determined image characteristic.

6. The device as defined in claim 4, wherein the image characteristic is a measurement of density of a subcell adjacent to a subcell of interest.

Dispersed Dot

FIG. 1A

Clustered Dot

FIG. 1B

FIG. 4

**FIG. 2A**

| 2 | 60 | 16 | 56 | 3 | 57 | 13 | 53 |
|---|----|----|----|---|----|----|----|
| 34 | 18 | 48 | 32 | 35 | 19 | 45 | 29 |
| 10 | 50 | 6 | 64 | 11 | 51 | 7 | 61 |
| 42 | 26 | 38 | 22 | 43 | 27 | 39 | 23 |
| 4 | 58 | 14 | 54 | 1 | 59 | 15 | 55 |
| 36 | 20 | 46 | 30 | 33 | 17 | 47 | 31 |
| 12 | 52 | 8 | 62 | 9 | 45 | 5 | 63 |
| 14 | 28 | 40 | 24 | 41 | 25 | 37 | 21 |

**FIG. 2B**

| 1 | 59 |
|---|----|
| 33 | 17 |

**FIG. 2C**

| 1 | 15 | 2 | 12 |
|---|----|---|----|
| 9 | 5 | 10 | 6 |
| 3 | 13 | 0 | 14 |
| 11 | 7 | 8 | 4 |

8

EP 0 710 007 A2

**FIG. 3**

I(x,y,c)

B(x,y,d)

116 — Output Buffer

B(x,y,d)

B(x,y)

106 — Comparator

122

104 (+)

Offset Generator — 102

Subpattern RAM — 100

Subpattern Variation Logic — 120

Scanline clock
Pixel clock

17

Pattern Select

Scanline clock

Pixel clock

MOD Y

MOD X

*FIG. 5*

50% Bayer Dot

*FIG. 6A*

Next Bayer Dot Density

5 Spot Cluster

*FIG. 6B*

4 Spot Clusters

*FIG. 6C*

FIG. 7A

FIG. 7B

FIG. 7C

EP 0 710 007 A2

| Address y | Address x | Black Pixel |
|---|---|---|
| 1 | 1 | 2 |
| 1 | 2 | 3 |
| 1 | 3 | 2 |
| • | • | • |
| • | • | • |
| • | • | • |
| x | y | z |

204

232

| Address | Sub Pattern # |
|---|---|
| 000 | |
| | |
| 232 | 3 |
| | |
| | |
| 444 | |

206

Pixel clock

b

Division  202

Pixel

Scanline clock

a

Divisions  200

Scanline y

B (x,y)

To Subpattern Select

**FIG. 8**